(19) Europäisches Patentamt

European Patent Office

Office européen des brevets

(11) **EP 1 445 017 A1**

(12) **DEMANDE DE BREVET EUROPEEN**

(43) Date de publication:
**11.08.2004 Bulletin 2004/33**

(51) Int Cl.7: **B01J 23/63**, B01D 53/94

(21) Numéro de dépôt: **04290242.9**

(22) Date de dépôt: **30.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **07.02.2003 FR 0301516**

(71) Demandeur: **Renault s.a.s.**
**92100 Boulogne Billancourt (FR)**

(72) Inventeurs:
• **Beziat, Jean-Christophe**
**91290 Arpajon (FR)**
• **Morali, Najat**
**91240 Saint-Michel-Sur-Orge (FR)**

(74) Mandataire: **Cemeli, Eric**
**Renault Technocentre,**
**1 avenue du Golf,**
**Sce 0267 TCR GRA 1 55**
**78288 Guyancourt (FR)**

(54) **Catalyseur à base de métaux précieux et ses utilisations dans le traitement des gaz d'échappement**

(57) L'invention se rapporte à un catalyseur est à ses différentes utilisations.

Le catalyseur comprend au moins un métal précieux, disposé sur un support comprenant au moins un oxyde de métaux de transition, au moins un oxyde de terres rares appartenant au groupe des lanthanides.

Le catalyseur est utilisé pour optimiser le fonctionnement du dispositif destiné à piéger les oxydes d'azote dans les gaz d'échappement. Le catalyseur favorise la formation d'hydrogène nécessaire pour réduire les oxydes d'azote. Le catalyseur contribue aussi à la désulfatation du piège à NOx.

## Description

La présente invention se rapporte à un catalyseur et à ses différentes utilisations dans des rampes d'échappement de moteurs à combustion.

La réduction des oxydes d'azote ($NO_x$) dans les gaz d'échappement des moteurs à combustion interne fonctionnant avec un excès d'air par rapport au carburant (mélange dit « pauvre »), s'effectue avec un très faible rendement.

Aussi des constructeurs ont envisagé de piéger les oxydes d'azote sur un solide pendant le fonctionnement normal du moteur en mélange « pauvre », de le désorber du matériau solide de stockage, puis de le réduire en $N_2$ par un passage transitoire en mélange riche, c'est-à-dire un mélange dont le rapport air/carburant est inférieur au rapport correspondant à la stoechiométrie.

Ce type de catalyseur est couramment appelé « piège à $NO_x$ » ou encore « $NO_x$-trap ».

L'invention se rapporte à un catalyseur permettant notamment d'optimiser le fonctionnement des dispositifs destinés à piéger les $NO_x$ ; cesdits dispositifs étant eux-mêmes d'autres catalyseurs.

Dans le cas particulier des moteurs diesel, les conditions réductrices (à savoir mélange dit « riche ») peuvent être obtenues par des techniques et des stratégies de contrôle du moteur, telles que par exemple celle de la post-injection.

De telles stratégies permettent d'obtenir de fortes concentrations de CO et d'hydrocarbures (HC), ainsi qu'une diminution très importante de la teneur en oxygène des gaz à la sortie du moteur. Or les HC sont des réducteurs des $NO_x$ moins efficaces que le CO ou $H_2$. De plus, il est important de limiter les émissions d'HC non traités.

Parmi les techniques connues jusqu'ici, il est possible d'obtenir de l'hydrogène, avec un bon rendement, grâce à l'utilisation d'un « réformateur » catalytique. Toutefois ce type de système est complexe et coûteux à mettre en place sur un véhicule automobile. Il apparaît donc préférable de pouvoir former de l'hydrogène grâce à un catalyseur simplement disposé sur la ligne d'échappement, en utilisant des stratégies de contrôle du moteur appropriées.

On connaît notamment du document JP 2001 289036 qu'il est possible de favoriser la formation d'hydrogène en injectant de l'eau en amont d'un catalyseur de type « 3-voies » lui-même disposé en amont d'un piège à $NO_x$. Malheureusement un tel système nécessite un dispositif d'injection d'eau liquide, entraînant par conséquent une architecture lourde.

Il est encore connu du document JP 2001 327838 un système d'injection de carburant en amont d'un catalyseur à base de rhodium, déposé en surface sur de la zircone, de manière à obtenir la formation d'hydrogène et de CO à partir d'hydrocarbures. Mais un tel système d'injection spécifique restreint l'étendue de son utilisation.

La formation d'hydrogène au sein même de la formulation catalytique de type piège à $NO_x$ est proposé dans la demande EP 1,036,591A1, par une répartition judicieuse, dans l'épaisseur de l'imprégnation, des différents éléments constituant le catalyseur. Certains de ces éléments sont capables de favoriser la formation d'hydrogène par réaction de CO avec la vapeur d'eau, alors que d'autres éléments catalysent plutôt les réactions de reformage des hydrocarbures par $H_2O$. Malheureusement dans un tel système catalytique, l'hydrogène est formé in-situ, et les réactions avec la vapeur d'eau sont en compétition avec les réactions de réduction des $NO_x$ stockés sur le catalyseur.

Enfin une autre façon de former de l'hydrogène au sein même de la formulation catalytique de type piège à $NO_x$ est proposé dans la demande WO 01/37978A1. Mais dans ce système, seules les réactions de reformage des HC sont favorisées par le catalyseur proposé, grâce à l'utilisation d'un matériau de type zéolithe qui stocke les HC émis à froid par le moteur, ces HC étant désorbés à plus haute température pour réagir avec la vapeur d'eau, et ainsi donner les produits de réformage. De plus, ce système comprend l'inconvénient de produire l'hydrogène in-situ, au sein même de la formulation catalytique de type piège à $NO_x$, et les réactions avec la vapeur d'eau sont en compétition avec les réactions de réduction des $NO_x$ stockés sur le catalyseur.

Aussi il subsiste le besoin de disposer d'un catalyseur qui évite les inconvénients cités précédemment, tout en permettant de réduire la surconsommation de carburant d'un moteur à combustion et en favorisant la transformation chimique en hydrogène des réducteurs présents dans le carburant, apportés par les gaz d'échappement provenant du moteur, avant le passage de ces gaz dans des pièges à $NO_x$ disposés en aval. La présence d'hydrogène en quantité suffisante permet de réduire les $NO_x$ avec un bon rendement.

L'invention a donc pour objet un catalyseur qui se caractérise en ce qu'il comprend au moins un métal précieux disposé sur un support comprenant au moins un oxyde de métaux de transition et au moins un oxyde de terres rares appartenant au groupe des lanthanides.

Le catalyseur selon l'invention présente les différents avantages suivants.

Il permet de favoriser les réactions chimiques suivantes :

*a)réaction dite « du gaz à l'eau »*

$$CO + H_2O \rightarrow CO_2 + H_2$$

et
*b) réactions de vaporéformage*

$$HC + H_2O \rightarrow CO + CO_2 + H_2 + HC'$$

et

$$HC + O_2 \rightarrow CO + CO_2 + H_2 + H_2O + HC''$$

où HC' et HC'' représentent des hydrocarbures à plus courtes chaîne produits par réaction des HC provenant du moteur sur le catalyseur.

Ces réactions sont effectuées à une température habituellement rencontrée dans les gaz d'échappement des moteurs à mélange dit « pauvre », tout en restant compatible à des températures où le piège à $NO_x$ présente une bonne efficacité de réduction des $NO_x$.

Le catalyseur de l'invention apporte, par ailleurs, des avantages concernant la désulfatation des pièges à $NO_x$. Il est connu que les pièges à $NO_x$ sont sensibles à la présence de soufre dans le carburant, présent sous la forme de $SO_2$ dans les gaz d'échappement. Ce soufre se stocke sous forme de sulfates sur les mêmes sites que ceux des $NO_x$. Aussi des opérations de désulfatation (encore appelées purges soufre) sont nécessaires à intervalles réguliers.

Le catalyseur de l'invention présente des conditions favorables à la désulfatation, par une diminution de sa durée tout en conservant son optimisation. L'optimisation de la durée de désulfatation permet de limiter le temps passé à haute température, et donc limite le vieillissement thermique dû aux désulfatations répétées.

Le catalyseur est par ailleurs de conception et de mise en oeuvre plus simples que les systèmes réducteurs connus jusqu'ici, puisqu'il évite l'ajout supplémentaire de réducteur, d'eau, ou de système de stockage d'hydrogène.

Il permet, en outre, d'augmenter la réduction des $NO_x$ pendant la désulfatation de manière plus efficace que les dispositifs connus jusqu'ici, tout en diminuant la surconsommation d'HC liée à la désulfatation.

Du fait que les HC sont moins efficaces que le CO ou $H_2$ pour la réduction des $NO_x$ en mélange riche, il est connu que les réglages moteur, permettant d'obtenir les conditions de purge, doivent favoriser la formation de CO au détriment des HC. Or il est difficile d'obtenir des ratio CO/HC élevés en mélange riche sur tous les points de fonctionnement du moteur.

La possibilité que confère le catalyseur, selon l'invention, de réaliser la transformation de HC en CO et $H_2$ permet d'utiliser des calibrations du moteur moins optimisées concernant notamment le rapport CO/HC.

Enfin, en favorisant la formation de CO et $H_2$ à partir de HC, le catalyseur de l'invention permet d'optimiser la durée de désulfatation, mais aussi de diminuer la quantité d'HC arrivant sur le piège à NOx, et donc la quantité d'HC non traités en purge.

L'invention a encore pour objet une utilisation d'au moins un catalyseur, tel que défini précédemment, pour favoriser la formation d'hydrogène à partir d'HC dans les gaz d'échappement des moteurs à combustion interne fonctionnant en mélange pauvre, en amont du dispositif destiné à piéger les $NO_x$.

Cette formation d'$H_2$, favorisée par le catalyseur apporte l'avantage de réduire la surconsommation d'HC.

Un dernier objet de l'invention est une utilisation d'au moins un catalyseur, tel que défini précédemment, pour favoriser la désulfatation du dispositif destiné à piéger les $NO_x$.

Les métaux précieux présents dans le catalyseur de l'invention peuvent être choisis parmi le platine, le palladium, le rhodium, et leur mélange.

Les métaux précieux peuvent être présents en une quantité allant d'environ $35,31.10^{-3}$ g/l à 10,593 g/l.

Le rhodium est de préférence présent en une quantité allant d'environ $35,31.10^{-3}$ g/l à 3,531 g/l.

De préférence, le catalyseur comprend entre autre du platine, du rhodium, du palladium, disposés sur un support comprenant $ZrO_2$ et/ou $CeO_2$ et/ou leurs oxydes mixtes et/ou $Al_2O_3$.

L'invention va maintenant être illustrée à l'aide des exemples de réalisation et des figures qui suivent, qui sont donnés uniquement à titre d'illustration et qui ne limitent en aucune façon l'objet de l'invention, et dans lesquels :

-    la figure 1 représente un schéma d'un premier mode de disposition du catalyseur selon l'invention sur une rampe de gaz d'échappement,

-    la figure 2 représente un schéma d'un second mode de disposition du catalyseur de l'invention sur une rampe de gaz d'échappement,

-    la figure 3 représente un troisième mode de disposition du catalyseur selon l'invention sur une rampe de gaz d'échappement,

-    la figure 4 représente un quatrième mode de disposition du catalyseur selon l'invention sur une rampe de gaz d'échappement, et

-    la figure 5 représente l'évolution, en fonction de la température, de la concentration en hydrogène obtenue dans des gaz d'échappement traversant le catalyseur de l'invention.

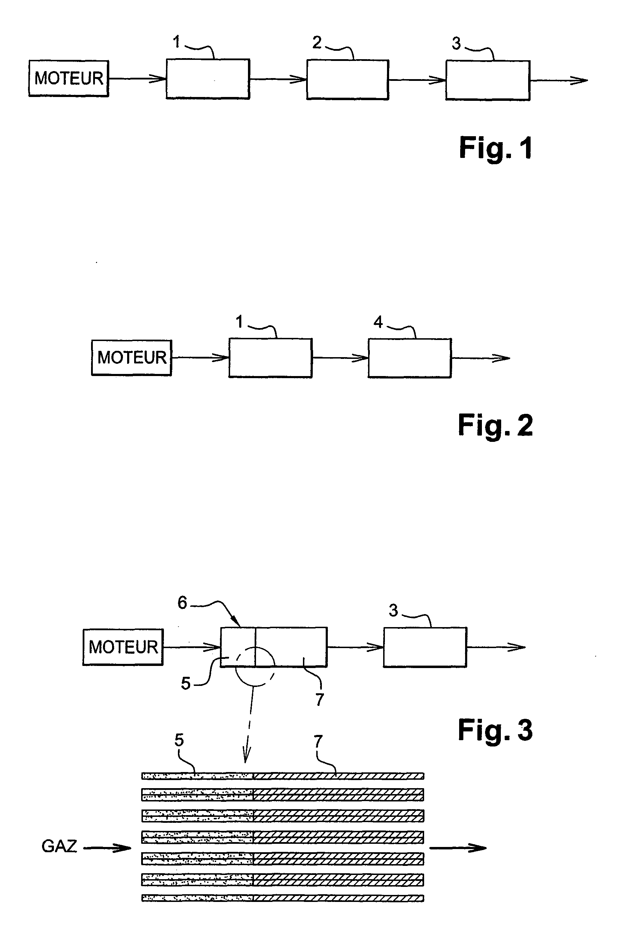

Selon le mode de réalisation de la figure 1, le catalyseur 1 est disposé à la sortie des gaz d'échappement, et en amont d'un piège 2 à $NO_x$. Ledit piège 2 est lui-même disposé en amont d'un filtre à particules 3; ce dernier pouvant être optionnel.

Dans un tel mode de réalisation, l'hydrogène et le CO formés lors du passage en milieu riche permettent d'optimiser la durée de désulfatation nécessaire à la réduction des oxydes d'azote stockés sur le piège à $NO_x$. En effet, l'ordre de réactivité des espèces réductrices vis-à-vis des $NO_x$ peut s'établir comme suit : $H_2$>CO>HC. Il est donc particulièrement intéressant de modifier la composition chimique des gaz arrivant sur le

piège à NO$_x$, en augmentant notamment la concentration d'hydrogène dans ces gaz.

Dans le mode de réalisation de la figure 2, le catalyseur 1 est disposé en amont d'un filtre à particules 4 imprégné d'une formulation catalytique de type piège à NO$_x$ (tel qu'un système 4-voies). Cette disposition permet d'assurer ainsi sur un même bloc, à savoir le système 4-voies, la fonction de filtration des suies et la fonction de réduction des oxydes d'azotes. On peut observer les mêmes phénomènes physico-chimiques que dans le mode de réalisation de la figure 1 .

Dans le mode de réalisation de la figure 3, le catalyseur de l'invention imprègne la face amont 5 d'un bloc monolithique 6 en céramique, alors que la face avale 7 de ce bloc comprend une imprégnation de type piège à NO$_x$. Le monolithe peut être suivi ensuite d'un filtre à particules.

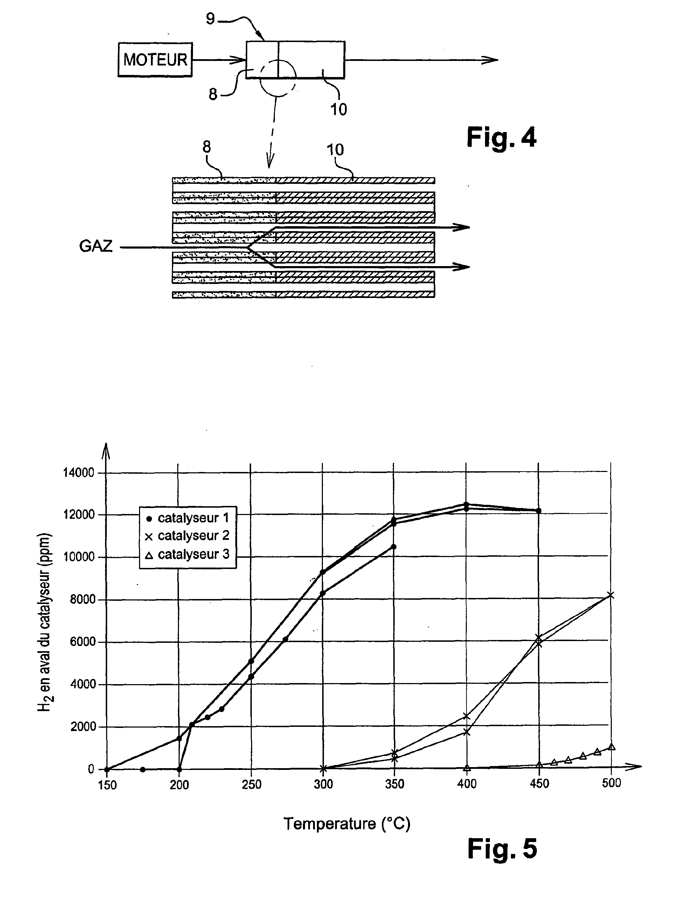

Enfin, selon le mode de réalisation de la figure 4, le catalyseur de l'invention imprègne la face amont 8 d'un filtre à particules 9, alors que la face avale 10 de ce filtre 9 est imprégnée d'un dispositif de type piège à NO$_x$.

La figure 5 représente différentes courbes obtenues à l'aide de trois compositions de catalyseur différentes selon l'invention. Ces trois compositions ont été soumises au même mélange gazeux synthétique

La figure 5 représente différentes courbes obtenues à l'aide de trois compositions de catalyseur différentes selon l'invention. Ces trois compositions ont été soumises au même mélange gazeux synthétique représentatif d'un mélange de gaz issu d'un moteur à combustion.

Le catalyseur 1 comprend entre autres 0,7062 g/l de rhodium disposé sur un support essentiellement constitué de Al$_2$O$_3$, CeO$_2$ et ZrO$_2$.

Le catalyseur 2 comprend entre autres 0,1059 g/l de rhodium disposé sur un support essentiellement constitué de Al$_2$O$_3$, CeO$_2$ et ZrO$_2$.

Le catalyseur 3 ne comprend pas de rhodium. Il est essentiellement constitué de platine déposé sur un support comprenant Al$_2$O$_3$.

Le mélange gazeux, auquel sont soumises les compositions, comprend les éléments suivants, donnés en pourcentage en volume :

- CO : 1,8%
- CO$_2$ : 6,5%
- NO : 550ppm
- HC : 5000ppmC$_1$
- H$_2$O : 6,5%
- O$_2$ : 1%

Les trois compositions ont été exposées à ce mélange gazeux à différents paliers de température. La teneur en hydrogène du mélange gazeux a été mesurée par chromatographie en phase gazeuse, en aval des trois catalyseurs précédents.

Les courbes de la figure 5, permettent de conclure que, selon la concentration en rhodium présent dans le catalyseur de l'invention, il est possible d'obtenir des concentrations élevées en hydrogène dans les gaz l'invention, est très favorable à la désulfatation d'un piège à NO$_x$ disposé en aval.

On peut encore noter que, pour le catalyseur 1 qui comprend la plus grande quantité de rhodium des 3 catalyseurs, la formation d'hydrogène commence à partir d'une température d'environ 200°C, donc plus rapidement que pour des catalyseurs comprenant moins, ou pas, du tout de rhodium [catalyseur 2 ou 3).

Ceci démontre l'intérêt économique du catalyseur de l'invention qui permet d'optimiser simplement et rapidement dans le temps les réactions de réduction des NO$_x$.

## Revendications

1. Catalyseur, **caractérisé en ce qu'**il comprend au moins un métal précieux disposé sur un support comprenant au moins un oxyde de métaux de transition et au moins un oxyde de terres rares appartenant au groupe des lanthanides.

2. Catalyseur selon la revendication 1, **caractérisé en ce que** les métaux précieux sont choisis parmi le platine, le palladium, le rhodium, et leur mélange.

3. Catalyseur selon la revendication 1, **caractérisé en ce que** les métaux précieux sont présents en une quantité allant d'environ 35,31.10$^{-3}$ g/l à 10,593 g/l.

4. Catalyseur selon la revendication 2, **caractérisé en ce que** le rhodium est présent en une quantité allant d'environ 35,31.10$^{-3}$ g/l à 3,531 g/l.

5. Catalyseur selon la revendication 1, **caractérisé en ce qu'**il comprend du platine et/ou du palladium et/ou du rhodium, sur un support comprenant ZrO$_2$ et/ou CeO$_2$, et/ou leurs oxydes mixtes et/ou Al$_2$O$_3$.

6. Utilisation d'au moins un catalyseur réducteur comprenant au moins un métal précieux, disposé sur un support comprenant au moins un oxyde de métaux de transition, au moins un oxyde de terres rares appartenant au groupe des lanthanides, pour favoriser la formation d'hydrogène à partir d'hydrocarbures, dans les gaz d'échappement des moteurs à combustion interne fonctionnant en mélange pauvre, en amont du dispositif destiné à piéger les oxydes d'azote.

7. Utilisation d'au moins un catalyseur comprenant au moins un métal précieux, disposé sur un support comprenant au moins un oxyde de métaux de transition, au moins un oxyde de terres rares appartenant au groupe des lanthanides, pour favoriser la désulfatation du dispositif destiné à piéger les oxydes d'azote.

8. Utilisation selon l'une des revendications 6 ou 7, **caractérisée en ce que** les métaux précieux sont choisis parmi le platine, le palladium, le rhodium, et leur mélange.

9. Utilisation selon l'une des revendications 6 ou 7, **caractérisée en ce que** les métaux précieux sont présents en une quantité allant d'environ $35,31.10^{-3}$ g/l à 10,593 g/l.

10. Utilisation selon l'une des revendications 6 ou 7, **caractérisée en ce que** le rhodium est présent en une quantité allant d'environ $35,31.10^{-3}$ g/l à 3,531 g/l.

MOTEUR → 1 → 2 → 3 →

**Fig. 1**

MOTEUR → 1 → 4 →

**Fig. 2**

MOTEUR → 6 / 5 / 7 → 3 →

**Fig. 3**

GAZ → 5 / 7 →

Fig. 4

Temperature (°C)

Fig. 5

**Office européen**

**des brevets**

**RAPPORT DE RECHERCHE EUROPEENNE**

Numéro de la demande

EP 04 29 0242

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DATABASE WPI<br>Section PQ, Week 200153<br>Derwent Publications Ltd., London, GB;<br>Class Q51, AN 2001-485701<br>XP002253878<br>-& JP 2001 179100 A (TOYOTA CHUO KENKYUSHO KK), 3 juillet 2001 (2001-07-03)<br>* abrégé *<br>* alinéas<br>[0002],[0012],[0022],[0023],[0035] *<br>--- | 1-10 | B01J23/63<br>B01D53/94 |
| Y | EP 0 537 968 A (TOYOTA MOTOR CO LTD)<br>21 avril 1993 (1993-04-21)<br>* colonne 2, ligne 45 - colonne 4, ligne 40 *<br>* colonne 11, ligne 39 - colonne 12, ligne 14 *<br>--- | 1-10 | |
| D,X | EP 1 036 591 A (TOYOTA MOTOR CO LTD)<br>20 septembre 2000 (2000-09-20) | 1-5,7-10 | |
| Y | * alinéas [0017],[0018],[0026]-[0031] *<br>--- | 1-10 | DOMAINES TECHNIQUES RECHERCHES (Int.Cl.7) |
| X | EP 1 095 702 A (TOYOTA MOTOR CO LTD)<br>2 mai 2001 (2001-05-02) | 1-5,7-10 | B01J<br>B01D |
| Y | * alinéas [0014],[0020]-[0024],[0034] *<br>--- | 1-10 | |
| X,D | DATABASE WPI<br>Section Ch, Week 200226<br>Derwent Publications Ltd., London, GB;<br>Class E36, AN 2002-198961<br>XP002253879<br>-& JP 2001 327838 A (NISSAN DIESEL KOGYO KK), 27 novembre 2001 (2001-11-27)<br>* abrégé *<br>* alinéa [0015] *<br>----- | 1-6 | |

Le présent rapport a été établi pour toutes les revendications

| Lieu de la recherche | Date d'achèvement de la recherche | Examinateur |
|---|---|---|
| MUNICH | 2 avril 2004 | Besselmann, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 0242

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2004

| Document brevet cité au rapport de recherche | | Date de publication | Membre(s) de la famille de brevet(s) | | Date de publication |
|---|---|---|---|---|---|
| JP 2001179100 | A | 03-07-2001 | AUCUN | | |
| EP 0537968 | A | 21-04-1993 | JP | 5106430 A | 27-04-1993 |
| | | | DE | 69207854 D1 | 07-03-1996 |
| | | | DE | 69207854 T2 | 05-06-1996 |
| | | | EP | 0537968 A1 | 21-04-1993 |
| | | | US | 5412946 A | 09-05-1995 |
| EP 1036591 | A | 20-09-2000 | JP | 11226404 A | 24-08-1999 |
| | | | CA | 2314358 A1 | 17-06-1999 |
| | | | EP | 1036591 A1 | 20-09-2000 |
| | | | US | 6461579 B1 | 08-10-2002 |
| | | | WO | 9929417 A1 | 17-06-1999 |
| EP 1095702 | A | 02-05-2001 | EP | 1095702 A1 | 02-05-2001 |
| | | | JP | 3494147 B2 | 03-02-2004 |
| | | | WO | 0000283 A1 | 06-01-2000 |
| JP 2001327838 | A | 27-11-2001 | AUCUN | | |

EPO FORM P0460

Pour tout renseignement concernant cette annexe : voir Journal Officiel de l'Office européen des brevets, No.12/82